Europäisches Patentamt

European Patent Office

Office européen des brevets

(19)

(11) Veröffentlichungsnummer: **0 332 020**
**A2**

(12) **EUROPÄISCHE PATENTANMELDUNG**

(21) Anmeldenummer: **89103477.9**

(51) Int. Cl.⁴: **B62D 7/06**

(22) Anmeldetag: **28.02.89**

(30) Priorität: **05.03.88 DE 3807301**

(43) Veröffentlichungstag der Anmeldung:
**13.09.89 Patentblatt 89/37**

(84) Benannte Vertragsstaaten:
**DE ES FR GB IT**

(71) Anmelder: **Fried. Krupp Gesellschaft mit beschränkter Haftung**
**Altendorfer Strasse 103**
**D-4300 Essen 1(DE)**

(72) Erfinder: **Carstengerdes, Gerhard, Dipl.-Ing.**
**Westerende 11 B**
**D-2932 Zetel(DE)**

(54) **Radführungsanordnung.**

(57) Die Radführungsanordnung hat ein Federbein (2), das aus einem am Fahrgestell (3) eines Fahrzeugs befestigten Führungsgehäuse (1) und einem axial und rotatorisch zu diesen bewegbaren Stützelement (4) besteht, wobei an dem Stützelement ein Radträger (8) befestigt ist. Außen an dem Führungsgehäuse (1) ist ein Lenkhebel (11; 11'; 11") drehbar gelagert und über eine in axialer Richtung kraft- und formschlußfreie Drehmitnehmeranordnung (17, 20; 25, 27, 28; 31, 32, 35) mit dem Radträger (8) verbunden.

Die Drehmitnehmeranordnung weist in einem Ausführungsbeispiel mindestens eine am Radträger (8) befestigte, parallel zur Achse (A) des Federbeins (2) ausgerichtete Führungssäule (25; 31, 32) auf, die mit am Lenkhebel (11'; 11") befestigten entsprechenden Führungselementen (27, 28; 35) im Eingriff steht.

FIG.3

EP 0 332 020 A2

## Radführungsanordnung

Die Erfindung betrifft eine Radführungsanordnung mit einem Federbein, bestehend aus einem am Fahrgestell eines Fahrzeugs befestigten Führungsgehäuse und einem axial und rotatorisch zu diesem bewegbaren Stützelement, mit einem an dem Stützelement befestigten Radträger und mit einem Führungselement. Eine derartige Radführungsanordnung ist jeweils für ein einzelnes Rad vorgesehen, das jedoch ggf. auch als zwillingsbereiftes Doppelrad ausgebildet sein kann.

Als Führungselement kommt ein Lenkhebel in Betracht, der von einem Lenkgestänge oder - im Falle nicht gelenkter Räder - von einem an einem festen Punkt des Fahrgestells angelenkten Lenker gehalten wird. Der Lenkhebel kann mehrere Anlenkpunkte haben, z.B. für das von dem Lenkgetriebe kommende Lenkgestänge, für die zum gegenüberliegenden Rad führende Spurstange und für eine zu einem voran- oder nachlaufenden Rad führende Koppelstange.

Das Stützelement kann hydraulisch mit einem Druckspeicher, pneumatisch und/oder durch mechanische Federelemente axial gegen das am Fahrgestell befestigte Führungsgehäuse abgefedert sein.

Bekannte Radführungsanordnungen werden insbesondere bei Kippern (Dumpern) verwendet.

Dabei hat die Achse des Federbeins zur besseren Spurführung der Räder im allgemeinen eine Spreizung von einigen Grad, d.h. die Achse des Federbeins ist unten etwas weiter von der gedachten Fahrzeug-Längsmittelebene entfernt als oben. Beim Ausfedern, d.h. beim teilweisen Herausgleiten des Stützelements aus dem Führungsgehäuse des Federbeins vergrößert sich somit der Abstand des das Rad haltenden Radträgers und des daran befestigten Lenkhebels als Führungselement von der Fahrzeug-Längsmittelebene. Bei jeweils einem linken und rechten lenkbaren Rad einer (gedachten) "Achse" sind die zugehörigen Lenkhebel durch eine Spurstange miteinander verbunden. Federn beide Räder gleichzeitig aus, so vergrößert sich der Abstand der Schwenkpunkte der Lenkhebel. Da die Länge der Spurstange unveränderlich ist, ergibt sich beim Aus- und Einfedern je nach der Lage des Gelenktrapezes (vorne oder hinten angeordnete Spurstange) eine Divergenz bzw. Konvergenz der Räder, d.h. diese nehmen eine auseinanderlaufende bzw. zusammenlaufende Stellung ein.

Demgegenüber sind die durch das Schwenken um die schräge Achse des Federbeins bedingten Abweichungen eines Anlenkpunkts des Lenkhebels von der (gedachten) senkrechten Projektion auf eine (ebenfalls gedachte) waagerechte Ebene vernachlässigbar klein.

Der Erfindung liegt die Aufgabe zugrunde, die Lenkung der Radführungsanordnung so zu gestalten, daß der beschriebene Lenkfehler beim Aus- und Einfedern vermieden wird.

Diese Aufgabe wird erfindungsgemäß dadurch gelöst, daß das Führungselement außen am Führungsgehäuse drehbar gelagert und über eine in axialer Richtung kraft- und formschlußfreie Drehmitnehmeranordnung mit dem Radträger verbunden ist.

Die Lagerung des Lenkhebels am feststehenden Führungsgehäuse ist - bezogen auf das Fahrgestell - in der Höhe unveränderbar. Der Abstand der Schwenkpunkte der Lenkhebel zweier entsprechender, gegenüberliegender Räder bleibt also erhalten. Aufgrund dieser Unveränderlichkeit des Lenktrapezes, das aus den Drehpunkten des Lenkhebels, den Lenkhebeln selbst und der diese beiden verbindenden Spurstange gebildet wird, bleiben die Räder auch bei einem Aus- und Einfedern in gleicher Spurstellung.

Vorteilhafte Weiterbildungen der Erfindung sind in den Unteransprüchen beschrieben. Bei der Ausbildung der Radführungsanordnung nach Anspruch 2 besteht die Mitnehmeranordnung aus je einem an dem Lenkhebel und dem Radträger an zwei Punkten angelenkten Hebel, die außerdem gemeinsam miteinander verbunden sind. In der Seitenansicht ergeben sie - bei gleicher geometrischer Länge - eine seitliche Hälfte eines in der Höhe veränderlichen Rhombus. Die zur Spurführung benötigte Übertragung von Drehmomenten vom Lenkhebel zum Radträger wird durch die über eine gewisse Breite wirksame axiale Anlenkung der Hebel erreicht.

Aufgrund der gegenüber dem Fahrgestell des Fahrzeugs unveränderlichen Höhe des Schwenkpunktes des Führungselements und der gleichen Schwenkwinkel des Führungselements und des Stützelements wird nach Anspruch 4 vorgeschlagen, einen auf die Bewegung des Radträgers ausgerichteten Weggeber an dem Führungselement zu befestigen. Dabei besteht der Weggeber nach Anspruch 5 vorzugsweise aus einem parallel zur Achse des Federbeins ausgerichteten, mit dem Radkörper verbundenen Metallteil und mindestens einem an dem Führungselement angeordneten Paar von Schaltelementen.

Ausführungsbeispiele des Gegenstandes der Erfindung sind in der Zeichnung dargestellt und werden im folgenden näher beschrieben. Es zeigen:

Fig. 1 eine Radführungsanordnung in einer Ansicht von hinten,

Fig. 2 die Radführungsanordnung in einem Schnitt längs der Linie II-II in Fig. 1,

Fig. 3 eine andere Ausführungsform einer Radführungsanordnung in einer Ansicht von hinten,

Fig. 4 eine weitere Ausführungsform einer Radführungsanordnung in einer Ansicht von hinten und

Fig. 5 eine Niveaumeßeinrichtung in einer auszugsweisen geschnittenen Darstellung.

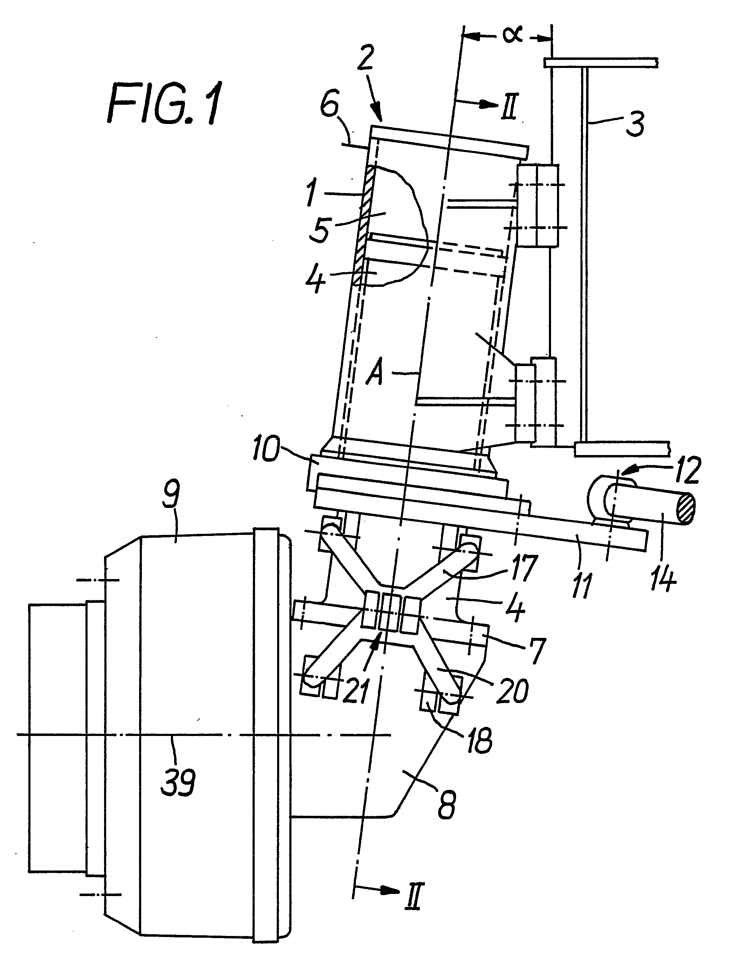

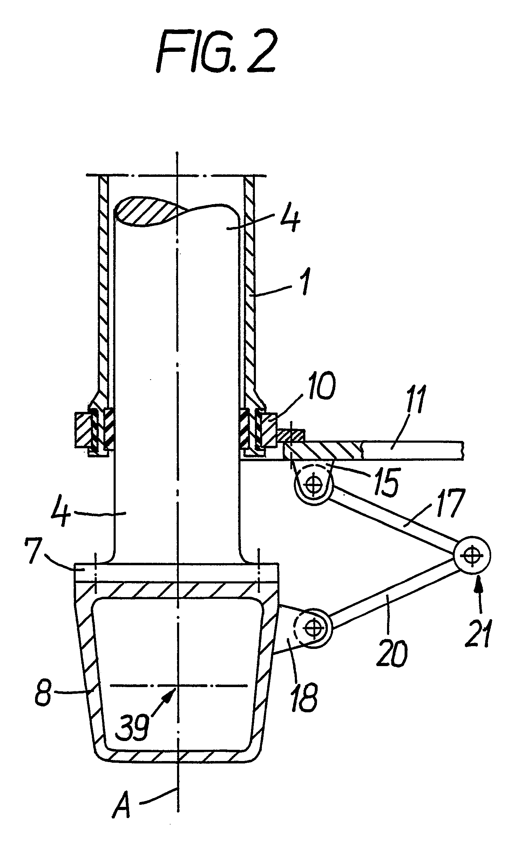

Bei der Radführungsanordnung gemäß den Fig. 1 und 2 ist das Führungsgehäuses 1 eines Federbeins 2 an einem Fahrzeugrahmen 3 befestigt, wobei die Achse A des Federbeins unter einem Spreizwinkel α gegen die Senkrechte geneigt ist. Innerhalb des Führungsgehäuses 1 ist ein Stützelement 4 um die Achse A rotatorisch und axial bewegbar geführt. Im einfachsten Fall ist das Stützelement 4 als Plungerkolben ausgebildet, wobei die darüber befindliche Zylinderkammer 5 mit einem Druckmittel gefüllt ist, das über eine Leitung 6 mit einer (nicht dargestellten) Druckversorgung mit Druckspeicher verbunden ist. Die Ausbildung des Inneren des Federbeins 2 ist jedoch nicht Gegenstand der vorliegenden Anmeldung.

Das zylindrisch ausgebildete Stützelement 4 ist unten mit einem Flansch 7 versehen, an dem ein Radträger 8 zur Aufnahme eines Rades angeschraubt ist, von dem in der Zeichnung lediglich die Radnabe 9 dargestellt ist.

Am unteren Rand des Führungsgehäuses 1 ist außen ein zweiteiliger Ring 10 drehbar gelagert, an dem als Führungselement ein Lenkhebel 11 angeschraubt ist. Dieser Lenkhebel 11 kann - in der Draufsicht gesehen - vielgliedrig ausgebildet sein und mehrere Gelenkzapfen 12 aufweisen, an denen jeweils ein Lenkgestänge 14 oder (nicht dargestellt) eine Spurstange oder eine zu einem voran- oder nachlaufenden Rad führende Koppelstange angelenkt ist.

Der Lenkhebel 11 weist zwei nach unten weisende Lagerstellen 15 auf, an die ein oberer V-förmiger Hebel oder Lenker 17 angelenkt ist. Der Radträger 8 weist ebenfalls zwei Lagerstellen 18 auf, an die ein weiterer, unterer V-förmiger Hebel oder Lenker 20 angelenkt ist. Die freien Enden der beiden Hebel 17, 20 bilden ein gemeinsames Scharniergelenk 21.

In Fig. 1 ist eine mittlere Höhenstellung (Niveau) des Stützelements 4 relativ zum Führungsgehäuse 1 dargestellt. Beim Einfedern verkürzt sich der Abstand der Lager 15, 18 und beim Ausfedern vergrößert er sich entsprechend. Dabei überträgt die aus den Hebeln 17, 20 bestehende Doppelhebelanordnung keinerlei Kräfte in Richtung der Achse A des Federbeins 2. Hingegen werden von der Doppelhebelanordnung 17, 20 bei jeder Höhenstellung des Stützelements 4 relativ zum Führungsgehäuse 1 Drehmomente vom Lenkhebel 11 zum Radträger 8 bzw. umgekehrt übertragen. Die Doppelhebelanordnung 17,20 funktioniert somit als in axialer Richtung kraft- und formlose Drehmitnehmeranordnung.

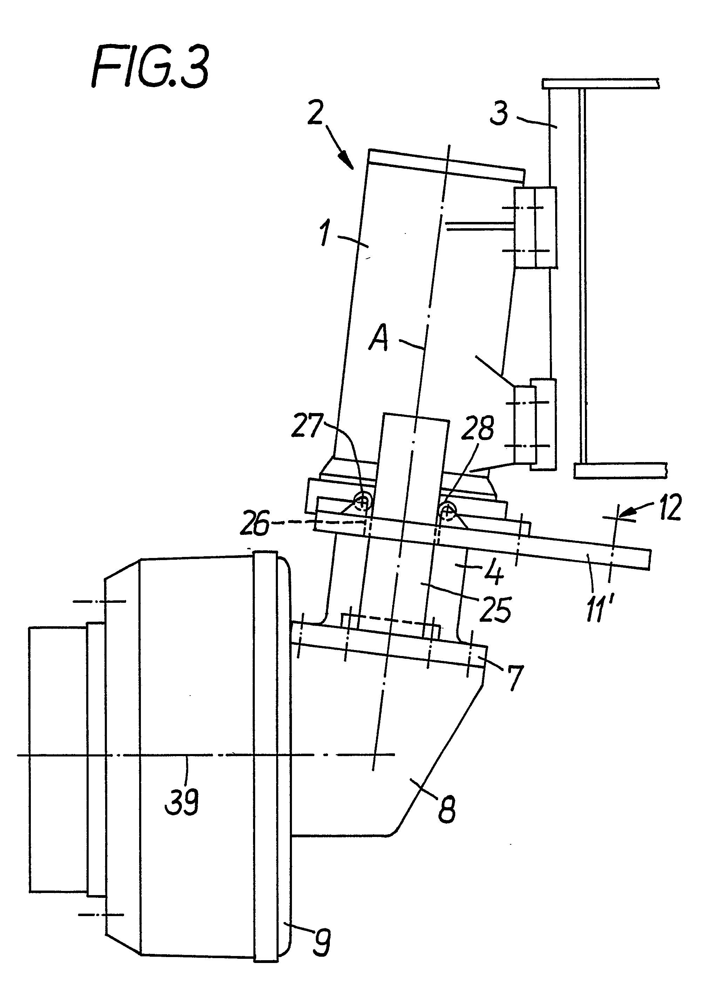

Bei dem Ausführungsbeispiel gemäß Fig. 3 ist an dem Flansch 7 des Stützelements 4 eine sich parallel zur Achse A erstreckende schildförmige Führungssäule 25 mit gleichbleibendem Querschnitt in Form z.B. eines Ringabschnitts befestigt. Diese Führungssäule 25 wird durch eine entsprechende Ausnehmung 26 im Lenkhebel 11$'$ zwischen zwei an diesem Lenkhebel befestigten Führungs- oder Druckrollen 27, 28 geführt. Beim Schwenken des Lenkhebels 11$'$ drückt eine der beiden Rollen 27 bzw. 28 gegen die Führungssäule 25 und schwenkt somit den Radträger 8 um den gleichen Winkel, um den sich der Lenkhebel 11$'$ bewegt. Axiale Kräfte werden auch bei der Drehmitnehmeranordnung 25/27/28 gemäß diesem Ausführungsbeispiel nicht übertragen.

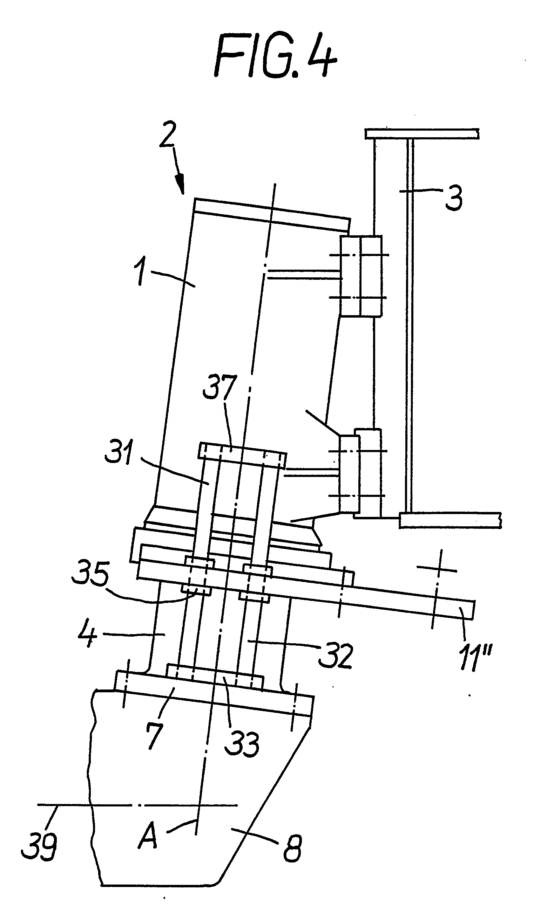

Bei dem Ausführungsbeispiel gemäß Fig. 4 weist die Drehmitnehmeranordnung zwei Führungsbolzen 31, 32 auf, die über einen gemeinsamen Träger 33 am Flansch 7 des Stützelements 4 befestigt sind. Die Führungsbolzen 31, 32 werden in im Lenkhebel 11$''$ befestigten Buchsen 35 geführt und sind zur Stabilität durch ein gemeinsames oberes Joch 37 miteinander verbunden. Die Funktion der Drehmomentübertragung ist die gleiche wie bei dem Ausführungsbeispiel gemäß Fig. 3.

Soweit es zur Stabilität der Führungs- und Drehmitnehmeranordnung sinnvoll ist, können die im Zusammenhang mit den Fig. 1 bis 4 beschriebenen Elemente der Drehmitnehmeranordnung - in Fahrtrichtung gesehen - sowohl vorne als auch hinten am Federbein 2 angeordnet sein.

Zur Einstellung einer definierten Höhe des Fahrzeugrahmens 3 in bezug auf die Radachsen 39 wird das Volumen des Hydraulikmediums in der Zylinder- oder Druckkammer 5 des Federbeins 2 über den Druck entsprechend bemessen. Bei einem geringen Spreizwinkel α des Federbeins 2 kann eine Änderung der Höhe bzw. des Niveaus des Fahrzeugrahmens 3 der Änderung der relativen Lage zwischen dem Führungsgehäuse 1 und dem Stützelement 4 mit großer Annäherung gleichgesetzt werden. Zur Bestimmung des jeweiligen Niveaus sind an dem Lenkhebel 11 bzw. 11$'$, 11$''$ Paare von Näherungsschaltern N11, N12; N21, N22; ... angeordnet, die jeweils auf ein parallel zur Achse A des Federbeins 2 verlaufendes, mit dem Flansch 7 des Stützelements 4 verbundenes Metallteil ansprechen. Im Falle der Ausführungsbeispiele gemäß den Fig. 3 und 4 dienen als entsprechendes Metallteil die Führungssäule 25 bzw. die Führungsbolzen 31, 32 oder, wenn diese mit einem Joch 37 verbunden sind, das Joch selbst.

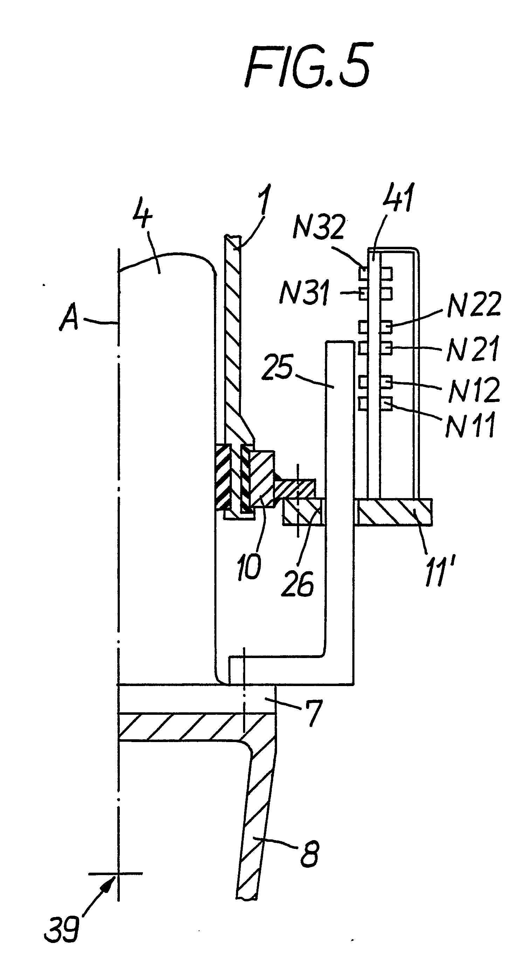

In Fig. 5 ist eine Niveaumeßeinrichtung im Zusammenhang mit der Führungssäule 25 dargestellt. In einem am Lenkhebel 11′ befestigten Halter 41 sind drei Paare von Näherungsschaltern N11, N12...N31, N32 dargestellt. Wenn von einem Paar von Näherungsschaltern,, z.B. N21, N22, der untere Näherungsschalter N21 aufgrund der vor ihm befindlichen Führungssäule 25 ein Signal abgibt und der obere Näherungsschalter N22 kein Signal abgibt, so befindet sich der obere Rand der Führungssäule 25 zwischen diesen beiden Näherungsschaltern. Geben beide Näherungsschalter ein Signal ab, so ist der obere Rand der Führungssäule 25 über diesem Paar (bei dem in Fig. 5 dargestellten Ausführungsbeispiel die Näherungsschalter N11, N12). Geben beide Näherungsschalter eines Paares kein Signal ab (bei dem in Fig. 5 dargestellten Ausführungsbeispiel die Näherungsschalter N31, N32), so befindet sich der obere Rand der Führungssäule 25 unterhalb des Paares. Das Niveau der Führungssäule 25 gegenüber dem Lenkhebel 11′ - und damit auch das Niveau des Stützelements 4 gegenüber dem feststehenden Gehäuse 1 bzw. das Niveau zwischen der Radachse 39 und dem Fahrgestellrahmen 3 - läßt sich somit in vorgebbaren Stufen ermitteln und in bekannter Weise über einen Regelkreis einstellen bzw. verändern.

## Ansprüche

1. Radführungsanordnung mit einem Federbein, bestehend aus einem am Fahrgestell eines Fahrzeugs befestigten Führungsgehäuse und einem axial und rotatorisch zu diesem bewegbaren Stützelement, mit einem an dem Stützelement befestigten Radträger und mit einem Führungselement,
**dadurch gekennzeichnet,** daß das Führungselement (11; 11′; 11″) außen am Führungsgehäuse (1) drehbar gelagert und über eine in axialer Richtung kraft- und formschlußfreie Drehmitnehmeranordnung (17, 20; 25, 27, 28; 31, 32, 35) mit dem Radträger (8) verbunden ist.

2. Radführungsanordnung nach Anspruch 1, dadurch gekennzeichnet, daß die Drehmitnehmeranordnung aus einem in zwei Punkten (15) einer Achse am Lenkhebel (11) gelenkig gelagerten Hebel (17) und einem in zwei Punkten (18) einer Achse am Radträger (8) gelenkig gelagerten Hebel (20) besteht, wobei die freien Enden der beiden Hebel (17, 20) eine gemeinsame Gelenkverbindung (21) aufweisen.

3. Radführungsanordnung nach Anspruch 1, dadurch gekennzeichnet, daß die Drehmitnehmeranordnung mindestens eine am Radträger (8) befestigte, parallel zur Achse (A) des Federbeins (2) ausgerichtete Führungssäule (25; 31, 32) aufweist, die mit am Führungselement (11; 11″) befestigten entsprechenden Führungselementen (27, 28; 35) im Eingriff steht.

4. Radführungsanordnung nach einem der Ansprüche 1 bis 3, dadurch gekennzeichnet, daß ein auf die Bewegung des Radträgers (8) ausgerichteter Weggeber (N11...N32) mit dem Führungselement (11; 11′; 11″) verbunden ist.

5. Radführungsanordnung nach Anspruch 4, dadurch gekennzeichnet, daß der Weggeber aus einem parallel zur Achse (A) des Federbeins (2) ausgerichteten Metallteil (25), das mit dem Radkörper (8) verbunden ist, und mindestens einem Paar von Schaltelementen (N11...N32), die mit dem Führungselement (11; 11′; 11″) verbunden sind, besteht.

# FIG.1

# FIG. 2

# FIG.3

# FIG.4

# FIG.5